# EUROPEAN PATENT APPLICATION

(11) **EP 0 727 562 A1**
(43) Date of publication of application: **21.08.1996**
(21) Application number: 96300775.2
(22) Date of filing: 05.02.1996
(51) Int. Cl.: E21D 9/08, E21D 9/10

(54) **Improved bearing system for a boring machine**

(30) Priority: 17.02.1995 GB 9503160
(71) Applicant: ROLLS-ROYCE POWER ENGINEERING plc, Newcastle-upon-Tyne NE3 3SB (GB)
(72) Inventor: YATES,David Edwin, Church Lench,Evesham WR11 4UE (GB)
(74) Representative: Barcock, Ruth Anita

(57) **Abstract**

A boring machine (10) comprises a cutter head (14) rotatably mounted on a hydrostatic bearing (30). High pressure water is supplied to passageways (35) between confronting bearing surfaces (33 and 34) which react axial and radial loads and which are capable of relative rotational movement. The flow of pressurised water discharges from the passageways (35) to prevent contamination of the bearing (30) by the ingress of material removed by the cutter head (14) in operation.

## Description

The present invention relates to a boring machine for producing tunnels or the like.

Conventional machines used for tunnel boring have a rotating cutter head mounted on heavily loaded bearings. Material removed by the cutter head during the boring operation passes rearwards for removal from the face of the cutter.

A problem with these conventional boring machines is that some of the material removed in the cutting operation penetrates the bearing seals and contaminates the bearings. Debris contamination of the bearings reduces the performance and the reliability of the bearings.

The present invention seeks to provide an improved boring machine in which the bearings are protected from contamination. Protecting the bearings from contamination increases the performance and reliability of the boring machine.

According to the present invention a boring machine comprises a cutter head rotatably mounted on at least one hydrostatic bearing, each bearing incorporating passageways between confronting bearing surfaces which react axial and radial loads, a bearing medium being supplied tc the passageways to separate the confronting bearing surfaces to permit relative rotational movement thereof, the bearing medium being discharged from the passageways to prevent contamination of the bearing by the ingress of material removed by the cutter head in operation.

Preferably the bearing medium is water.

The confronting bearing surfaces may be conical and the bearing medium may be passed to recesses in the confronting face of one of bearing surfaces.

In a preferred embodiment of the present invention the bearing medium discharged from the passageways is filtered and recirculated through the bearing.

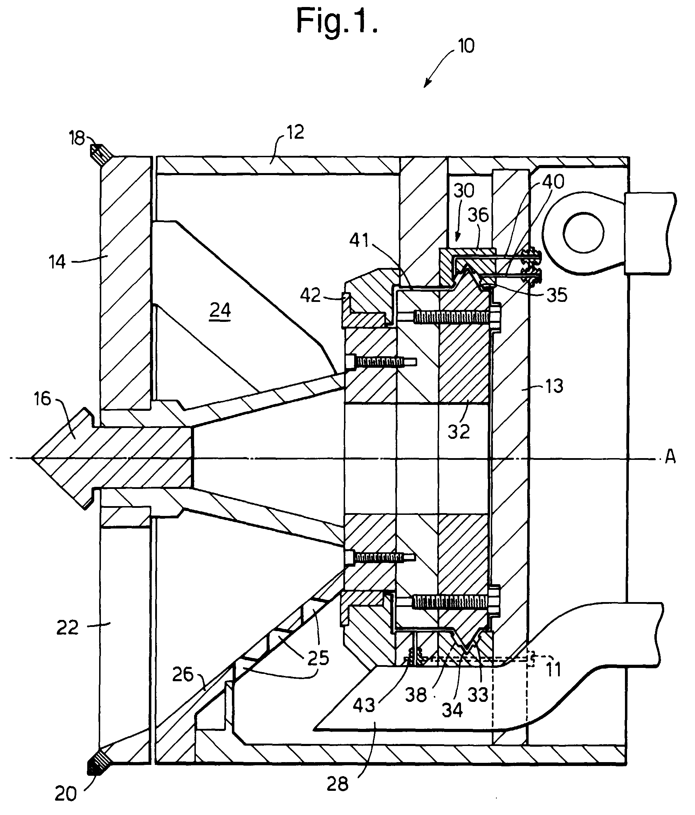

The present invention will now be described with reference to figure 1 which is a cross-sectional view of a boring machine in accordance with the present invention.

Referring to figure 1 a boring machine 10 has a housing 12 and a cutter head 14 mounted on a hydrostatic bearing 30 for rotation about a central axis A. The cutter head 14 has a central cutter cone 16 and two further cutters 18 and 20 mounted at the radially outer edges of the cutter head 14. An opening 22 is provided in the cutter head 14 through which material removed during the cutting operation passes. A crusher vane 24 is located behind the cutter head 14 and reduces the size of the material passed through the cutter head 14 to a size sufficiently small for it to pass through apertures 25 in a grid 26 to a suction duct 28. A vacuum is applied to the suction duct 28 to remove the material which passes through the grid 26 from the machine 10.

The hydrostatic bearing, generally indicated at 30, has an inner ring 32 and an outer ring 36. The outer ring 36 is fixed by fastening means 11 to a support panel 13 mounted in the housing 12 of the boring machine 10. The cutter head 14 is attached to the inner ring 32 for rotation therewith.

Bearing surfaces 33 project from the outer surface of the inner ring 32 and confront bearing surfaces 34 provided in the inner surface of the outer ring 36. The bearing surfaces 33 and 34 are conical and a clearance 35 is provided between them.

In operation when rotation of the cutter head 14 is required the bearing surfaces 33 and 34 are separated by the supply of a pressurised flow of water to the clearance 35. The water is supplied to recesses 38 provided in the stationary outer ring 36 via ducts 40. The pressure of the water in the recesses 38 causes the bearing surfaces 33 and 34 to separate. The water acts a lubricant to permit rotation of the inner ring 32 relative to the outer ring 36.

The flow of water discharges from the clearance 35 and passes through ducts 41 to a drain 43. Discharge of the water prevents the ingress of material removed during the cutting operation into the hydrostatic bearing 30 and thus improves the performance and reliability of the bearing 30.

Seals 42 located forward of the hydrostatic bearing 30 allow the discharged water to be recirculated and filtered.

It will be appreciated by one skilled in the art that although in the embodiment described water is used as the bearing medium any other expendable bearing medium, liquid or gaseous, could be used.

Although the bearing surfaces 33 and 34 shown are conical they could be of any other orientation provided they react axial and radial loads.

## Claims

1. A boring machine (10) comprising a cutter head (14) rotatably mounted on at least one hydrostatic bearing (30), each bearing (30) incorporating passageways (35) between confronting bearing surfaces (33,34) which react axial and radial loads, a bearing medium being supplied to the passageways (35) to separate the confronting bearing surfaces (33,34) to permit relative rotational movement of the bearing surfaces (33,34) characterised in that the bearing medium is discharged from the passageways (35) to prevent contamination of the bearing (30) by the ingress of material removed by the cutter head (14) in operation.

2. A boring machine as claimed in claim 1 characterised in that the bearing medium is pressurised water.

3. A boring machine as claimed in claim 1 or claim 2 characterised in that the confronting bearing surfaces (33,34) are conical.

4. A boring machine (10) as claimed in claim 3 characterised in that recesses (38) are provided in at least one of the confronting bearing surfaces (33) to which the bearing medium is provided.

5. A boring machine as claimed in any preceding claim characterised in that the bearing medium discharged from the passageways (35) is filtered and recirculated through the bearing (30).
